(19) Europäisches Patentamt

European Patent Office

Office européen des brevets

(11) **EP 1 153 083 B1**

(12) **EUROPÄISCHE PATENTSCHRIFT**

(45) Veröffentlichungstag und Bekanntmachung des Hinweises auf die Patenterteilung:
**04.08.2004 Patentblatt 2004/32**

(21) Anmeldenummer: **00903578.3**

(22) Anmeldetag: **14.01.2000**

(51) Int Cl.⁷: **C08L 67/02**, C08K 7/02

(86) Internationale Anmeldenummer:
**PCT/EP2000/000267**

(87) Internationale Veröffentlichungsnummer:
**WO 2000/044831 (03.08.2000 Gazette 2000/31)**

(54) **FORMMASSEN FÜR KRAFTFAHRZEUG-INNENANWENDUNGEN**

MOULDING MATERIALS FOR USE IN MOTOR VEHICLE INTERIORS

MATIERES DE MOULAGE S'UTILISANT A L'INTERIEUR D'AUTOMOBILES

(84) Benannte Vertragsstaaten:
**AT BE CH CY DE DK ES FI FR GB GR IE IT LI LU MC NL PT SE**

(30) Priorität: **27.01.1999 DE 19903073**

(43) Veröffentlichungstag der Anmeldung:
**14.11.2001 Patentblatt 2001/46**

(73) Patentinhaber: **BASF AKTIENGESELLSCHAFT 67056 Ludwigshafen (DE)**

(72) Erfinder:
 • **FISCHER, Michael**
  **D-67071 Ludwigshafen (DE)**
 • **KNOLL, Manfred**
  **D-67591 Wachenheim (DE)**
 • **GINSS, Christophe**
  **F-67120 Wolxheim (FR)**
 • **BERZ, Stephan**
  **D-60529 Frankfurt (DE)**

(74) Vertreter: **Isenbruck, Günter, Dr.
Isenbruck, Bösl, Hörschler, Wichmann, Huhn,
Patentanwälte
Theodor-Heuss-Anlage 12
68165 Mannheim (DE)**

(56) Entgegenhaltungen:
 **EP-A- 0 392 357     EP-A- 0 643 104
 DE-A- 4 235 302     US-A- 4 535 124**

 • **DATABASE WPI Derwent Publications Ltd.,
 London, GB; AN 1989-058222 XP002138032 & JP
 01 011152 A (NISSAN MOTOR CO LTD), 13.
 Januar 1989 (1989-01-13)**

**Beschreibung**

Die Erfindung betrifft faserverstärkte Formmassen, Formteile und Verbunde daraus sowie die Verwendung der Formmassen, Formteile und Verbunde.

Formteile aus polymeren Werkstoffen, die insbesondere im Innenraum von Kraftfahrzeugen zur Anwendung kommen, müssen hohen Anforderungen vor allem bezüglich ihrer mechanischen Eigenschaften, ihrer Oberflächeneigenschaften, ihres Alterungs- sowie ihres Geruchsverhaltens genügen. Für die Herstellung von Formteilen für Kraftfahrzeug-Innenanwendungen wurden bisher verschiedene polymere Werkstoffe verwendet.

Ein verwendeter Werkstoff ist glasfaserverstärktes ABS/PC (Polymer-Blend aus Acrylnitril/Butadien/Styrol-Copolymer und Polycarbonat). Dieser Werkstoff weist jedoch eine nur unzureichende UV-Beständigkeit, schlechte Fließfähigkeit, ein schlechtes Wärmealterungsverhalten (Zähigkeit und Bruchdehnung nach Wärmelagerung), ungünstige Oberflächeneigenschaften, insbesondere Schaumhaftung, schlechte Schaumhaftung und ein Auswandern der Glasfasern sowie insbesondere ein schlechtes Geruchsverhalten auf. Unter Geruchsverhalten wird die Neigung von Werkstoffen verstanden, nach einer Temperatur- und Klimalagerung von festgelegter Dauer flüchtige Bestandteile abzugeben, die einen wahrnehmbaren Geruch aufweisen.

Als weiterer Werkstoff kommt glasfaserverstärktes, zähmodifiziertes SMA (Styrol/Maleinsäureanhydrid-Copolymer) zum Einsatz. Auch SMA weist nur unzureichende Oberflächeneigenschaften, eine schlechte Wärmealterungsbeständigkeit, sowie insbesondere eine widrige Wärmeformbeständigkeit ein schlechtes Geruchsverhalten auf.

Ein anderer Werkstoff, der für die Herstellung von Formteilen für Kraftfahrzeuginnenräume in Betracht kommt ist PPE/HIPS GF (ein Polymer-Blend aus Polyphenylenether und High-Impact-Polystyrol sowie Glasfasern). Dieser Werkstoff weist gleichfalls eine schlechte Fließfähigkeit, schlechte Oberflächeneigenschaften, insbesondere das Auswandern der Glasfasern, was zu einer rauhen Oberfläche führt, schlechte UV-Beständigkeit, schlechte Wärmealterung und schließlich ein schlechtes Geruchsverhalten auf.

Ein anderer Werkstoff, der für die Kraftfahrzeug-Innenanwendung geeignet ist, ist PP/Mineral/EPDM. Hierbei handelt es sich um ein Polymer-Blend, das aus Polypropylen, einem mineralischen Füllstoff und einem Ethylen-Propylen-Dienterpolymer besteht. Auch dieser Werkstoff weist eine geringe Steifigkeit, schlechte Schaumhaftung und schlechte Lackierbarkeit auf.

Bis auf mineralverstärktes PP weisen die vorstehend genannten Werkstoffe zudem eine nur schlechte Wärmeformbeständigkeit auf, die in einer nur geringen Vicat B-Erweichungstemperatur (Vicat B < 130 °C) zum Ausdruck kommt. Eine gute Wärmeformbeständigkeit und Wärmealterungsbeständigkeit der eingesetzten Werkstoffe ist jedoch essentiell, da sich der Kraftfahrzeug-Innenraum, insbesondere unter Einwirkung von Sonnenstrahlung, erheblich aufheizen kann.

DE 41 23 041 A1 betrifft eine thermoplastische Formmasse, die als Hauptkomponente neben weiteren Komponenten 40 bis 90 Gewichtsteile eines thermoplastischen aromatischen Polycarbonats enthält.

DE 44 36 776 A1 betrifft eine thermoplastische Polycarbonat-Formmasse mit 50 bis 95 Gew.-% eines thermoplastischen aromatischen Polycarbonats als Hauptbestandteil.

CA-JP 03-263453 A betrifft eine lösungsmittelresistente thermoplastische Formmasse im wesentlichen aus Polycarbonat und Polybutylenterephthalat, die durch Stahlfasern verstärkt ist.

Aufgabe der Erfindung ist es, für die Herstellung von Formteilen, die im Innenraum von Kraftfahrzeugen eingesetzt werden, geeignete Formmassen zur Verfügung zu stellen, die ein günstiges Eigenschaftsprofil hinsichtlich ihrer mechanischen, optischen und sensorischen Eigenschaften sowie insbesondere eine gute Wärmeformbeständigkeit, Wärmealterungsbeständigkeit und ein gutes Emissionsverhalten und/oder Geruchsverhalten aufweisen. Weiterhin sollen die Formmassen eine möglichst geringe Dichte aufweisen. Die geringe Dichte ist besonders im Hinblick auf Kraftstoffeinsparung bei Kraftfahrzeugen vorteilhaft. Zudem ist eine Laserbemusterung, vorzugsweise -Beschriftung der Formmassenoberfläche erwünscht. Diese erlaubt eine technisch einfache und sehr genaue Oberflächengestaltung. Darüber hinaus sollen die Formmassen eine möglichst geringe Emission von flüchtigen Bestandteilen aufweisen, so daß sich thermisch belastbare, vorzugsweise metallisierte Oberflächen aufweisende Formkörper aus den erfindungsgemäßen Formmassen herstellen lassen, die insbesondere in Scheinwerfern eingesetzt werden. Zudem sollen die Oberflächen der Formteile aus den erfindungsgemäßen Formmassen eine gute Haftung für Schäume bieten.

Gelöst wird die Aufgabe durch eine faserverstärkte Formmasse, enthaltend, bezogen auf die Summe der Komponenten A bis F und gegebenenfalls G bis I, die insgesamt 100 Gew.-% ergibt,

a)      1 bis 96,86 Gew.-% der Formmasse mindestens eines schmelzbaren Polyesters als Komponente A aus

a1)      60 bis 100 Gew.-% Polybutylenterephthalat und

a2)      0 bis 40 Gew.-% eines weiteren Polyesters,

b)    1 bis 12 Gew.-% mindestens eines teilchenförmigen Pfropfcopolymerisats mit einer Glasübergangstemperatur der Weichphase unterhalb von 0° C und einer mittleren Teilchengröße von 50 bis 1000 nm als Komponente B,

c)    1 bis 12 Gew.-% mindestens eines Copolymerisats als Komponente C aus den Monomeren,

c1)    50 bis 90 Gew.-% mindestens eines vinylaromatischen Monomeren als Komponente C1 und

c2)    10 bis 50 Gew.-% Acrylnitril und/oder Methacrylnitril als Komponente C2, jeweils bezogen auf die Komponente C,

d)    1 bis 20 Gew.-% Fasern als Komponente D,

e)    0,01 bis 15 Gew.-% eines Polycarbonats als Komponente E,

f)    0,01 bis 2 Gew.-% eines Rußes als Komponente F,

g)    0 bis 12 Gew.-% eines zur Komponenten B unterschiedlichen Polymers als Komponente G,

h)    0 bis 20 Gew.-% einer zu Komponente A unterschiedlichem Polyesters als Komponente H,

i)    0,1 bis 10 Gew.-% übliche Zusatzstoffe wie UV-Stabilisatoren, Pigmente, Oxidationsverzögerer, Gleit- und Entformungsmittel als Komponente I.

Die erfindungsgemäße Formmasse enthält als restlicher Bestandteil bis zu 100 Gew.-% der Formmasse, also gemäß der jetzigen Zusammensetzung der Formmasse bis 96,86 Gew.-%, bevorzugt 20 bis 75 Gew.-%, besonders bevorzugt 30 bis 60 Gew.-% einer Komponente A aus

a1)    60 bis 100, bevorzugt 80 bis 100 Gew.-%, besonders bevorzugt 90 bis 100 Gew.-% Polybutylenterephthalat

und

a2)    0 bis 40 Gew.-%, 0 bis 20 Gew.-%, besonders bevorzugt 0 bis 10 Gew.-% eines weiteren Polyesters.

In einer weiteren erfindungsgemäßen Ausführungsform enthält die Formmasse kein PET. Darüber hinaus sind Formmassen bevorzugt, bei denen die Kompoenente A PET-frei ist.

Als Komponente B enthält die erfindungsgemäße Formmasse 1 bis 50 Gew.-%, bevorzugt 1,5 bis 15 Gew.-%, besonders bevorzugt 3 bis 10 Gew.-%, insbesondere 3 bis 8 Gew.-% mindestens eines teilchenförmigen Pfropfcopolymerisats mit einer Glasübergangstemperatur der Weichphase unterhalb von 0°C und einer mittleren Teilchengröße von 50 bis 1000 nm.

Vorzugsweise handelt es sich bei Komponente B um ein Pfropfcopolymerisat aus

b1)    50 bis 90 Gew.-% einer teilchenförmigen Pfropfgrundlage B 1 mit einer Glasübergangstemperatur unterhalb 0°C und

b2)    10 bis 50 Gew.-% einer Pfropfauflage B2 aus den Monomeren

b21)    50 bis 90 Gew.-% eines vinylaromatischen Monomeren als Komponente B21 und

b22)    10 bis 50 Gew.-% Acrylnitril und/oder Methacrylnitril als Komponente B22.

Die teilchenförmige Pfropfgrundlage B1 kann aus 70 bis 100 Gew.-% eines $C_1$- $C_{10}$konjugierten Diens oder beide, vorzugsweise eines $C_1$- bis $C_{10}$-Alkylesters der Acrylsäure, 0 bis 30 Gew.-% eines difunktionellen Monomeren mit zwei olefinischen, nicht konjugierten Doppelbindungen bestehen. Solche Pfropfgrundlagen werden beispielsweise bei ABS-Polymeren oder MBS-Polymeren als Komponente B eingesetzt.

Gemäß einer bevorzugten Ausführungsform der Erfindung besteht die Pfropfgrundlage B1 aus den Monomeren

b11)    75 bis 99,9 Gew.-% eines $C_1$- bis $C_{10}$-Alkylesters der Acrylsäure als Komponente B11,

b12)  0,1 bis 10 Gew.-% mindestens eines polyfunktionellen Monomeren mit mindestens zwei olefinischen, nicht konjugierten Doppelbindungen als Komponente B12 und

b13)  0 bis 24,9 Gew.-% eines oder mehrerer weiterer copolymerisierbarer Monomere als Komponente B13.

Bei der Pfropfgrundlage B 1 handelt es sich um ein Elastomeres, welches eine Glasübergangstemperatur von bevorzugt unterhalb -20 °C, besonders bevorzugt unterhalb -30 °C aufweist.

Für die Herstellung des Elastomeren werden als Hauptmonomere B 11 Ester der Acrylsäure mit 1 bis 10 C-Atomen, insbesondere 4 bis 8 C-Atomen in der Alkoholkomponente, eingesetzt. Besonders bevorzugte Monomere B 11 sind iso- und n-Butylacrylat sowie 2-Ethylhexylacrylat, von denen Butylacrylat besonders bevorzugt ist.

Neben den Estern der Acrylsäure werden als vernetzendes Monomer B 12 0,1 bis 10, bevorzugt 0,1 bis 5, besonders bevorzugt 1 bis 4 Gew.-% eines polyfunktionellen Monomeren mit mindestens zwei olefinischen, nicht konjugierten Doppelbindungen eingesetzt. Beispiele sind Divinylbenzol, Diallylfumarat, Diallylphthalat, Triallylcyanurat, Triallylisocyanurat, Tricylodecenylacrylat und Dihydrodicyclopentadienylacrylat, von denen die beiden zuletzt genannten besonders bevorzugt sind.

Neben den Monomeren B11 und B 12 können am Aufbau der Pfropfgrundlage B1 noch bis zu 24,9, vorzugsweise bis zu 20 Gew.-% weiterer copolymerisierbarer Monomere, vorzugsweise Butadien-1,3, Styrol, $\alpha$-Methylstyrol, Acrylnitril, Methacrylnitril und $C_1$- bis $C_8$-Alkylester der Methacrylsäure oder Mischungen dieser Monomeren beteiligt sein. In einer besonders bevorzugten Ausführungsform enthält die Pfropfgrundlage B1 kein Butadien-1,3, insbesondere besteht die Pfropfgrundlage B 1 ausschließlich aus den Komponenten B11 und B 12.

Auf die Pfropfgrundlage B 1 ist eine Pfropfauflage B2 aus den Monomeren

b21)  50 bis 90 Gew.-%, vorzugsweise 60 bis 90 Gew.-%, besonders bevorzugt 65 bis 80 Gew.-% eines vinylaromatischen Monomeren als Komponente B21 und

b22)  10 bis 50 Gew.-%, vorzugsweise 10 bis 40 Gew.-%, besonders bevorzugt 20 bis 35 Gew.-% Acrylnitril oder Methacrylnitril oder deren Mischungen als Komponente B22

Beispiele für vinylaromatische Monomere sind unsubstituiertes Styrol und substituierte Styrole wie $\alpha$-Methylstyrol, p-Chlorstyrol und p-Chlor-$\alpha$-Methylstyrol. Bevorzugt sind unsubstituiertes Styrol und $\alpha$-Methylstyrol, besonders bevorzugt ist unsubstituiertes Styrol.

Gemäß einer Ausführungsform der Erfindung beträgt die mittlere Teilchengröße der Komponente B 50 bis 200 nm, bevorzugt 55 bis 150 nm.

Gemäß einer weiteren Ausführungsform der Erfindung beträgt die mittlere Teilchengröße der Komponente B 200 bis 1000 nm, bevorzugt 400 bis 550 nm.

Gemäß einer besonders bevorzugten Ausführungsform der Erfindung ist die Teilchengrößenverteilung der Komponente B bimodal, wobei die Komponente B zu 10 bis 90 Gew.-%, bevorzugt zu 30 bis 90 Gew.-%, besonders bevorzugt zu 50 bis 75 Gew.-% aus einem kleinteiligen Pfropfcopolymerisat mit einer mittleren Teilchengröße von 50 bis 200 nm, bevorzugt 55 bis 150 nm und zu 10 bis 90 Gew.-%, bevorzugt zu 10 bis 70 Gew.-% , besonders bevorzugt zu 25 bis 50 Gew.-% aus einem großteiligen Pfropfcopolymerisat mit einer mittleren Teilchengröße von 250 bis 1000 nm, bevorzugt ca. 400 bis 550 nm, besteht.

Als mittlere Teilchengröße bzw. Teilchengrößenverteilung werden die aus der integralen Massenverteilung bestimmten Größen angegeben. Bei den erfindungsgemäßen mittleren Teilchengrößen handelt es sich in allen Fällen um die Gewichtsmittel der Teilchengrößen, wie sie mittels einer analytischen Ultrazentrifuge entsprechend der Methode von W. Scholtan und H. Lange, Kolloid-Z. und Z.-Polymere 250 (1972), Seiten 782 - 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.-% der Teilchen bezogen sind. Der Quotient

$$\frac{d_{90} - d_{10}}{d_{50}} = Q$$

stellt ein Maß für die Verteilungsbreite der Teilchengröße dar. Als Komponente A erfindungsgemäß verwendbare Emulsionspolymerisate A weisen vorzugsweise Q-Werte kleiner als 0,5, insbesondere kleiner als 0,35 auf.

Das Pfropfcopolymerisat B ist im allgemeinen ein- oder mehrstufig, d.h. ein aus einem Kern und einer oder mehreren Hüllen aufgebautes Polymerisat. Das Polymerisat besteht aus einer Grundstufe (Pfropfkern) B 1 und einer oder - bevorzugt - mehreren darauf gepfropften Stufen B2 (pfropfauflage) , den sogenannten Pfropfstufen oder Pfropfhüllen.

Durch einfache Pfropfung oder mehrfache Pfropfung können eine oder mehrere Pfropfhüllen auf die Kautschukteilchen aufgebracht werden, wobei jede Pfropfhülle eine andere Zusammensetzung haben kann. Zusätzlich zu den pfropfenden Monomeren können polyfunktionelle vemetzende oder reaktive Gruppen enthaltende Monomere mit aufgepfropft werden (s. z. B. EP-A 0 230 282, DE-A 36 01 419, EP-A O 269 861 ).

Gemäß einer Ausführungsform der Erfindung dienen als Pfropfgrundlage B1 vernetzte Acrylsäureester-Polymerisate mit einer Glasübergangstemperatur unter 0° C. Die vernetzten Acrylsäureester-Polymerisate sollen vorzugsweise eine Glasübergangstemperatur unter -20 °C, insbesondere unter -30° C, besitzen.

Prinzipiell ist auch ein mehrschaliger Aufbau des Pfropfcopolymerisats möglich, wobei mindestens eine innere Schale eine Glasübergangstemperatur von unter 0 °C und die äußerste Schale eine Glasübergangstemperatur von mehr als 23 °C aufweisen sollte.

In einer bevorzugten Ausführungsform besteht die Pfropfauflage B2 aus mindestens einer Pfropfhülle und die äußerste Pfropfhülle davon hat eine Glasübergangstemperatur von mehr als 30°C, wobei ein aus den Monomeren der Pfropfauflage B2 gebildetes Polymer eine Glasübergangstemperatur von mehr als 80°C aufweisen würde.

Geeignete Herstellverfahren für Pfropfcopolymerisate B sind die Emulsions-, Lösungs-, Masse- oder Suspensionspolymersiation. Bevorzugt werden die Pfropfcopolymerisate B durch radikalische Emulsionspolymerisation hergestellt, bei Temperaturen von 20 °C - 90 °C unter Verwendung wasserlöslicher und oder öllöslicher Initiatoren wie Peroxodisulfat oder Benzylperoxid, oder mit Hilfe von Redoxinitiatoren. Redoxinitiatoren eignen sich auch zur Polymerisation unterhalb von 20 °C.

Geeignete Emulsionspolymerisationsverfahren sind beschrieben in DE-A-28 26 925, DE-A 31 49 358 und in DE-C-12 60 135.

Der Aufbau der Pfropfhüllen erfolgt vorzugsweise im Emulsionspolymerisationsverfahren wie es beschrieben ist in den DE-A-32 27 555, 31 49 357, 31 49 358, 34 14 118. Das definierte Einstellen der erfindungsgemäßen Teilchengrößen von 50 - 1000 nm erfolgt bevorzugt nach den Verfahren, die beschrieben sind in der DE-C-12 60 135 und DE-A-28 26 925, bzw. Applied Polymer Science, Band 9 (1965), Seite 2929. Das Verwenden von Polymerisaten mit unterschiedlichen Teilchengrößen ist beispielsweise bekannt aus DE-A-28 26 925 und US 5,196,480.

Als Komponente C enthalten die erfindungsgemäßen Formmassen 1 bis 50 Gew.-%, bevorzugt 7,5 bis 20 Gew.-%, besonders bevorzugt 10 bis 18 Gew.-% eines Copolymerisats aus den Monomeren

c1)   75 bis 90 Gew.-%, bevorzugt 77 bis 90 Gew.-%, besonders bevorzugt 81 bis 80 Gew.-%, mindestens eines vinylaromatischen Monomeren als Komponente C1 und

c2)   10 bis 25 Gew.-%, vorzugsweise 10 bis 23 Gew. %, besonders bevorzugt 10 bis 19 Gew.-%, insbesondere 15 bis 19 Gew.-%, Acrylnitril und/oder Methacrylnitril als Komponente C2.

Als vinylaromatische Monomere sind die oben stehend genannten Monomere C1 und die oben stehend als Komponente B21 genannten vinylaromatischen Monomere geeignet. Vorzugsweise ist Komponente C ein amorphes Polymerisat, wie es vorstehend als Pfropfauflage B2 beschrieben ist. Gemäß einer Ausführungsform der Erfindung wird als Komponente C ein Copolymerisat von Styrol und/oder $\alpha$-Methylstyrol mit Acrylnitril verwendet. Der Acrylnitrilgehalt in diesen Copolymerisaten der Komponente C liegt dabei nicht oberhalb 25 Gew.-% und beträgt im allgemeinen 10 bis 25 Gew.-%, bevorzugt 10 bis 22 Gew.-%, besonders bevorzugt 10 bis 19 Gew.-%, insbesondere 15 bis 19 Gew.-%. Zur Komponente C zählen auch die bei der Pfropfcopolymerisation zur Herstellung der Komponente B entstehenden freien, nicht gepfropften Styrol-Acrylnitril-Copolymerisate. Je nach den bei Pfropfcopolymerisation für die Herstellung der Pfropfcopolymerisats A gewählten Bedingungen kann es möglich sein, daß bei der Pfropfcopolymerisation schon ein hinreichender Anteil an Komponente C gebildet worden ist. Im allgemeinen wird es jedoch erforderlich sein, die bei der Pfropfcopolymerisation erhaltenen Produkte mit zusätzlicher, separat hergestellter Komponente C abzumischen.

Bei dieser zusätzlichen, separat hergestellten Komponente C kann es sich vorzugsweise um ein Styrol/Acrylnitril-Copolymerisat, ein $\alpha$-Methylstyrol/Acrylnitril-Copolymerisat oder ein $\alpha$-Methylstyrol/Styrol/Acrylnitril-Terpolymerisat handeln. Wesentlich ist, daß der Gehalt an Acrylnitril in den Copolymerisaten C 25 Gew.-%, insbesondere 19 Gew.-% nicht übersteigt. Die Copolymerisate können einzeln oder auch als Gemisch für die Komponente C eingesetzt werden, so daß es sich bei der zusätzlichen, separat hergestellten Komponente C der erfindungsgemäßen Formmassen beispielsweise um ein Gemisch aus einem Styrol/Acrylnitril-Copolymerisat (PSAN) und einem $\alpha$-Methylstyrol/Acrylni-

tril-Copolymerisat handeln kann. Auch der Acrylnitrilgehalt der verschiedenen Copolymerisate der Komponente C kann unterschiedlich sein. Vorzugsweise besteht die Komponente C jedoch nur aus einem oder mehreren Styrol/Acrylnitril-Copolymerisaten, wobei die Copolymerisate einen unterschiedlichen Gehalt an Acrylnitril aufweisen können. In einer insbesonderen bevorzugten Ausführungsform besteht die Komponente C aus nur einem Styrol/Acrylnitril-Copolymerisat.

Als Komponente D enthalten die erfindungsgemäßen Formmassen 1 bis 20 Gew.-%, bevorzugt 5 bis 18 Gew.-%, besonders bevorzugt 10 bis 18 Gew.-%, insbesondere 10 bis 15 Gew.-% an Fasern. Dabei handelt es sich um kommerziell erhältliche Produkte.

Diese haben in der Formmasse im allgemeinen eine mittlere Länge von 0,1 bis 0,5 mm, vorzugsweise 0,1 bis 0,4 mm und einen Durchmesser im Bereich von 6 bis 20 µm. Bevorzugt sind Glasfasern und Mineralfasern, insbesondere Glasfasern, vorzugsweise aus E-Glas. Zur Erzielung einer besseren Haftung können die Fasern mit Organosilanen, Epoxisilanen oder anderen Polymerüberzügen beschichtet sein.

Als Komponente E enthalten die erfindungsgemäßen Formmassen 0,01 bis 15, bevorzugt 0,1 bis 12 und besonders bevorzugt 4 bis 10 Gew.-% eines Polycarbonats, bezogen auf die Formmasse. Als Polycarbonate sind alle dem Fachmann bekannten geeignet, wobei die schmelzbaren besonders geeignet sind. In diesem Zusammenhang wird auf "Polymer Chemistry, A Introduction", 2nd Edition, Malcolm P. Stevens Oxford University Press, 1990, Seiten 400 bis 403 und "Principles of Polymerisation", 2nd Edition, George Odian, Whiley Interscience Publication John Whiley & Sons, 1981, Seiten 146 bis 149 verwiesen. Besonders geeignete Polycarbonate weisen eine hohe Fließfähigkeit, vorzugsweise eine MVR bei 300 °C und 1,2 kg von > 9, bevorzugt >15 und besonders bevorzugt >20 auf, wobei bevorzugte Komponenten E eine MVR von maximal 100, bevorzugt 90 und besonders bevorzugt 50 zeigen. Insbesondere als Komponente E bevorzugt ist Lexan 121 R der Firma General Electric Plastics. Weiterhin hat sich der Einsatz von PC-Recyclat sowohl als "Post Industrial-" und "Post Consumer-Recyclat" als besonders geeignet herausgestellt, da es sich besonders gut verarbeiten läßt.

Zudem enthalten die erfindungsgemäßen Formmassen 0,0 1 bis 2, bevorzugt 0,1 bis 0,5 und besonders bevorzugt 0,1 bis 0,3 Gew.-%, bezogen auf die Formmasse, einen Ruß als Komponente F. Erfindungsgemäß eignen sich alle dem Fachmann bekannten Ruße für die Komponente F. Besonders bevorzugt sind Acetylen Ruß oder der durch Verbrennung von Teer, Teerölen, Naphtalin oder Kohlenwasserstoff reichen Erdgasen oder Erdölrückständen bei unzureichender Luftzufuhr beziehungsweise bei rascher Abkühlung der Verbrennungsgase entstehender Ruß. Durch den Rußgehalt der erfindungsgemäßen Formmassen wird deren Laserbemusterbarkeit und insbesondere -beschriftbarkeit mit hoher Kontraststärke ermöglicht.

Als Komponente G können die erfindungsgemäßen Formmassen 0 bis 12 Gew.-% , bevorzugt 0 bis 10 und besonders bevorzugt 4 bis 8 Gew.-%, zu B unterschiedlichen, vorzugsweise mit den Komponenten A und/oder C homogen mischbare oder in diesen dispergierbare Polymere enthalten. Es können vorzugsweise übliche . (gepfropfte) Kautschuke Verwendung finden, wie Ethylen-Vinylacetat-Kautschuke, Siliconkautschuke, Polyetherkautschuke, hydrierte Dienkautschuke, Polyalkenamerkautschuke, Acrylatkautschuke, Ethylen-Propylen-Kautschuke, Ethylen-Propylen-Dien-Kautschuke und Butylkautschuke, Methylmethacrylat-Butadien-Styrol (MBS)-Kautschucke, Methylmethacrylat-Butylacrylat-Styrol-Kautschuke, vorzugsweise sofern diese mit der aus den Komponenten A, B und C gebildeten Mischphase mischbar bzw. in dieser dispergierbar sind. Bevorzugt werden Acrylatkautschuke, Ethylen-Propylen (EP)-Kautschuke, Ethylen-Propylen-Dien(EPDM)-Kautschuke, insbesondere als Pfropfcopolymere, Verwendung finden. In Frage kommen ferner mit der aus den Komponenten B und C gebildeten Mischphase verträgliche bzw. mischbare Polymere oder Copolymere wie Polyacrylate, Polymethacrylate, insbesondere PMMA, Polyphenylenether oder syndiotaktisches Polystyrol. In Frage kommen ferner Reaktivkautschuke, die an den Polyester (Komponente A) über eine kovalente Bindung anbinden, wie mit Säureanhydriden, wie Maleinsäureanhydrid, oder Epoxy-Verbindungen, wie Glycidyl-Methacrylat, gepfropfte Polyolefinkautschuke und/oder partikuläre Acrylatkautschuke. Schließlich ist auch die Verwendung eines oder mehrerer Polymere bzw. Copolymere möglich, die in der Grenzfläche zwischen der aus den Komponenten B und/oder C gebildeten amorphen Phase und der aus der Komponente A gebildeten kristallinen oder teilkristallinen Phase vorliegen und so für eine bessere Anbindung der beiden Phasen sorgen. Beispiele solcher Polymere sind Pfropfcopolymere aus PBT und PSAN oder segmentierte Copolymere wie Block-Copolymere oder Multiblock-Copolymere aus mindestens einem Segment aus PBT mit $M_W$ > 1000 und mindestens einem Segment aus PSAN oder einem mit PSAN verträglichen/mischbaren Segment mit $M_W$ >1000.

Ferner enthält die erfindungsgemäße Formmasse 0 bis 20, bevorzugt 0 bis 15 und besonders bevorzugt 0 bis 10 Gew.-%, bezogen auf die gesamte Formmasse, eines zu Komponente A unterschiedlichen Polyesters als Komponente H. Der Polyester der Komponente H weist mindestens 50, bevorzugt mindestens 70 und besonders bevorzugt 100 Gew.-% Polyethylenterephthalat (PET) bezogen auf die Komponente H, auf. Als weitere Polyester der Komponente H sind die bereits voranstehend definierten aromatischen Polyester bevorzugt. Das PET kann sowohl direkt aus der Synthese stammend als auch als Recyclat, vorzugsweise aus Mahlgut aus PET-Flaschen, eingesetzt werden. PET-Recyclat einzusetzen bietet sich zum einen aus Kostengründen und zum anderen wegen der die Zähigkeit der Formmasse verbessernden Wirkung des PET-Recyclats an. Damit besteht das erfindungsgemäß in Komponente H eingesetzte PET vorzugsweise aus mindestens 50, bevorzugt mindestens 80 und besonders bevorzugt zu 100 % aus PET-Recyclat.

Als Komponente I enthalten die erfindungsgemäßen Formmassen 0,1 bis 10 Gew.-% übliche Zusatzstoffe. Als solche Zusatzstoffe seien beispielsweise genannt: UV-Stabilisatoren, Umesterungsstabilisatoren, Oxidationsverzögerer, Gleit- und Entformungsmittel, Farbstoffe, Pigmente, Färbemittel, Keimbildungsmittel, Antistatika, Antioxidantien, Stabilisatoren zur Verbesserung der Thermostabilität, zur Erhöhung der Lichtstabilität, zum Anheben der Hydrolysebeständigkeit und der Chemikalienbeständigkeit, Mittel gegen die Wärmezersetzung und insbesondere die Schmier/Gleitmittel, die für die Herstellung von Formkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Wärmestabilisatoren bzw. Oxidationsverzögerer sind üblicherweise Metallhalogenide (Chloride, Bromide, Iodide), die sich von Metallen der Gruppe I des Periodensystems der Elemente ableiten (wie Li, Na, K, Cu).

Geeignete Stabilisatoren sind die üblichen sterisch gehinderten Phenole, aber auch Vitamin E bzw. analog aufgebaute Verbindungen. Auch HALS-Stabilisatoren (Hindered Amine Light Stabilizers), Benzophenone, Resorcine, Salicylate, Benzotriazole und andere Verbindungen sind geeignet (beispielsweise Irganox®, Tinuvin®, wie Tinuvin® 770 (HALS-Absorber, Bis (2,2,6,6-tetramethyl-4-piperidyl)sebacat) oder Tinuvin®P (UV-Absorber - (2H-Benzotriazol-2-yl)-4-methylphenol), Topanol®). Diese werden üblicherweise in Mengen bis zu 2 Gew.-% (bezogen auf das Gesamtgemisch) verwendet.

Als Umesterungsstabilisatoren sind beispielsweise organische Phosphonite wie Tetrakis-(2,4-di-tert.-butylphenyl)-bisphenylen-diphosphonit (Irgaphos® PEPQ der Firma Ciba Geigy AG) sowie Monozinkphosphat (Mono- oder Di-hydrat) geeignet. Die Umesterungsstabilisatoren können beispielsweise in Pulverform oder als PBT-Batches vorliegen.

Geeignete Gleit- und Entformungsmittel sind Stearinsäuren, Stearylalkohol, Stearinsäureester bzw allgemein höhere Fettsäuren, deren Derivate und entsprechende Fettsäuregemische mit 12 bis 30 Kohlenstoffatomen. Die Mengen dieser Zusätze liegen im Bereich von 0,05 bis 1 Gew.-%.

Auch Siliconöle, oligomeres Isobutylen oder ähnliche Stoffe kommen als Zusatzstoffe in Frage; die üblichen Mengen betragen 0,05 bis 5 Gew.-%. Pigmente, Farbstoffe, Farbaufheller, wie Ultramarinblau, Phthalocyanine, Titandioxid, Cadmiumsulfide, Derivate der Perylentetracarbonsäure sind ebenfalls verwendbar.

Verarbeitungshilfsmittel und Stabilisatoren wie UV-Stabilisatoren, Schmiermittel und Antistatika werden üblicherweise in Mengen von 0,01 bis 5 Gew.-% verwendet, bezogen auf die gesamte Formmasse.

Auch Keimbildungsmittel, wie Talkum, Calciumfluorid, Natriumphenylphosphinat, Aluminiumoxid oder feinteiliges Polytetrafluorethylen können in Mengen z. B. bis zu 5 Gew.-%, bezogen auf die gesamte Formmasse, angewandt werden. Weichmacher, wie Phthalsäuredioctylester, Phthalsäuredibenzylester, Phthalsäurebutylbenzylester, Kohlenwasserstofföle, N-(n-Butyl)benzolsulfonamid, o- und p-Toluolethylsulfonamid werden vorteilhaft in Mengen bis etwa 5 Gew.-%, bezogen auf die Formmasse, zugesetzt. Färbemittel, wie Farbstoffe und Pigmente können in Mengen bis zu etwa 5 Gew.-%, bezogen auf die Formmasse, zugesetzt werden.

Zudem ist es bevorzugt, daß die erfindungsgemäße Formmasse eine Komponente G mit einem Copolymer aufweist, das kein Butadien- oder Isoprenderivat oder keines von beiden enthält.

In einer anderen Ausfürungsform der erfindungsgemäßen Formmasse ist es bevorzugt, daß keines der in der Formmasse eingesetzten Pfropfcopolymere ein Butadien- oder Isoprenderivat oder keines von beiden aufweisen.

Eine andere erfindungsgemäß bevorzugte Formmasse weist kein Butadien- oder Isoprenderivat oder keines von beiden auf.

Butadien und Isopren sind als Derivate bevorzugt.

Das Mischen der Komponenten A bis I kann nach jeder beliebigen Weise nach allen bekannten Methoden erfolgen. Beim Mischen können die Komponenten als solche oder auch in Form von Mischungen der einen Komponente mit einer oder mehreren der anderen Komponenten eingesetzt werden. Beispielsweise kann die Komponente B mit einem Teil oder der gesamten Komponente C vorgemischt und anschließend mit den übrigen Komponenten gemischt werden. Wenn die Komponenten B und C beispielsweise durch Emulsionspolymerisation hergestellt worden sind, ist es möglich, die erhaltenen Polymerdispersionen miteinander zu vermischen, darauf die Polymerisate gemeinsam auszufallen und das Polymerisatgemisch aufzuarbeiten. Vorzugsweise erfolgt jedoch das Abmischen der Komponenten B und C durch gemeinsames Exdrudieren, Kneten oder Verwalzen der Komponenten, wobei die Komponenten B und C, sofern erforderlich, zuvor aus der bei der Polymerisation erhaltenen Lösung oder wässrigen Dispersion isoliert worden sind. Die erfindungsgemäßen thermoplastischen Formmassen können beispielsweise hergestellt werden, indem man die Komponente A mit jeweils den Komponenten B und C oder mit einer Mischung aus diesen, und gegebenenfalls mit den weiteren Komponenten mischt, in einem Extruder aufschmilzt und die Fasern über ein Einlaß am Extruder zuführt.

Die Komponente E kann mit den anderen Komponenten der Formmasse sowohl im "Cold-Feed-Verfahren" d.h. bei Temperaturen unterhalb der Schmelztemperatur der Komponenten, vor der Verarbeitung in einer Mischvorrich-

tung, vermischt werden. Bevorzugt ist es jedoch, wenn die Komponente E im "Hot-Feed-Verfahren", d.h. in der Schmelze den anderen Komponenten der Formmasse zur Einarbeitung in die Formmasse zugeführt wird. Erfindungsgemäß ist es für das "Hot-Feed-Verfahren" ein Temperaturbereich von 250 bis 280 °C bevorzugt und von 260 bis 270 °C besonders bevorzugt.

In einer weiteren Ausführungsform des erfindungsgemäßen Verfahrens ist es vorteilhaft, die Komponente D gleichfalls im "Hot-Feed-Verfahren" durch Zugabe zu den anderen Komponenten der Formmassen in diese einzuarbeiten.

Besonders hat es sich erfindungsgemäß bewährt, die Komponenten D und E jeweils unabhängig voneinander, d.h. ohne sie miteinander vorzuvermischen, im "Hot-Feed-Verfahren" durch Zugabe zu den anderen Komponenten in die Formmasse einzuarbeiten.

Die erfindungsgemäßen Formmassen können nach den bekannten Verfahren der Thermoplastverarbeitung zu Formteilen verarbeitet werden. Insbesondere kann deren Herstellung durch Thermoformen, Extrudieren, Spritzgießen, Kalandrieren, Hohlkörperblasen, Pressen, Preßsintem, Tiefziehen oder Sintern, vorzugsweise durch Spritzgießen erfolgen. Die aus den erfindungsgemäßen Formmassen herstellbaren Formteile sind ebenfalls Gegenstand der vorliegenden Erfindung.

Die aus den erfindungsgemäßen Formmassen hergestellten Formteile weisen nur geringe Emissionen an flüchtigen Bestandteilen mit einem wahrnehmbaren Geruch auf. Das Geruchsverhalten von Polymerwerkstoffen wird nach DIN 50011 / PV 3900 beurteilt und gilt für Bauteile des Fahrzeuginnenraums. Das Ergebnis der Geruchsprüfung nach dieser Norm ist im Falle der erfindungsgemäßen Formteile im allgemeinen besser als Note 5, bevorzugt besser als Note 4,5 besonders bevorzugt besser als Note 4. Die Kohlenstoff-Emission der Formteile nach PV 3341 ist im allgemeinen < 50 µg/g, bevorzugt < 40 µg/g, besonders bevorzugt < 35 µg/g. Die Untergrenze liegt vorzugsweise bei 20 µg/g.

Die erfindungsgemäßen Formteile weisen weiterhin eine gute Wärmeformbeständigkeit auf. Die Vicat B-Erweichungstemperatur ist im allgemeinen > 130 °C, bevorzugt > 135 °C, besonders bevorzugt > 138 °C. Vorzugsweise liegt die Obergrenze der Vicat B-Erweichungstemperatur bei 160 °C.

Die erfindungsgemäßen Formteile weisen ferner ein gutes Wärmealterungsverhalten auf. So ist die Schlagzähigkeit der erfindungsgemäßen Formteile nach ISO 179/1eU nach 1000 Stunden dauernder Wärmelagerung bei 130 °C im allgemeinen > 25 kJ pro m$^2$, bevorzugt > 30 kJ pro m$^2$. Die Bruchdehnung der erfindungsgemäßen Formteile ist nach 1000 Stunden dauernder Wärmelagerung bei 130 °C im allgemeinen > 1,5 %, bevorzugt > 2 % und besonders bevorzugt > 2,5 %. Die Schlagzähigkeitabnahme nach ISO 179/1eU nach einer 1000 h dauernder Wärmelagerung bei 120 °C von < 30 %, vorzugsweise < 10 % gegenüber vor der Wärmelagerung ist bevorzugt. Die Bruchdehnung nach DIN 53457 nach 1000 h dauernder Wärmelagerung bei 130 °C > 2,5 %, jedoch maximal 5 %, hat sich bewährt.

Die erfindungsgemäßen Formteile weisen ferner gute mechanische Eigenschaften auf. So ist ihr Elastizitätsmodul im allgemeinen > 3000, bevorzugt > 4500 MPa, jedoch vorzugsweise maximal bei 10000 MPa, ihre Streckspannung im allgemeinen > 80, bevorzugt > 85 MPa, jedoch vorzugsweise maximal bei 120 MPa, ihre Schlagzähigkeit nach ISO 179/1eU im allgemeinen > 45, bevorzugt > 48 kJ/m$^2$, ihre Schlagzähigkeit ohne vorherige Wärmelagerung nach ISO 179/1eA, im allgemeinen > 6 kJ/m$^2$, jedoch jeweils unter 75 kJ/m$^2$, und ihre HDT B (gemessen nach ISO 75, Ausführungsform B) im allgemeinen > 190 °C, bevorzugt > 200 °C, jedoch maximal bei 230 °C, und ihre Fließfähigkeit als MVR (Melt-Volume-Ratio 275 °C/2,16 kp Auflagekraft gemäß ISO 1133) > 10, bevorzugt > 14 cm$^3$/ 10 min, jedoch maximal bei 30 cm$^3$/ 10 min. Eine Stauchhärte nach DIN 53577 von 20 bis 100 kPa bei 20 bis 60 % Stauchung ist zudem für die erfindungsgemäßen Formmassen bevorzugt.

Die erfindungsgemäßen Formteile weisen, auch nach 1000 h dauernder Wärmelagerung bei 130 °C, bei -30 °C kein Splitterverhalten im Durchstoßversuch (2 und 3 mm Plattendurchmesser, gemäß ISO 6603/2) auf.

Darüber hinaus ist erfindungsgemäß eine Dichte der Formmasse im Bereich von 1,2 bis 1,4, bevorzugt 1,25 bis 1,35 und besonders bevorzugt 1,28 bis 1,33 gegeben.

Die erfindungsgemäßen Formmassen eigenen sich aufgrund ihrer hohen Wärmeformbeständigkeit, ihrer guten Wärmealterungsbeständigkeit, ihren guten mechanischen Eigenschaften sowie ihrer guten Oberflächeneigenschaften für eine Vielzahl von Formteile, die diese Formmassen beinhalten. Nur beispielhaft seien genannt: Kameragehäuse, Handygehäuse, Stutzen für Ferngläser, Wrasenkanal für Dunstabzugshaben, Teile für Dampfkochtöpfe, Gehäuse für Heißluftgrills und Pumpengehäuse.

Aufgrund der oben genannten Eigenschaften eignen sich die erfindungsgemäßen Formteile insbesondere für Anwendungen in Kraftfahrzeugen.

Erfindungsgemäße Formteile sind daher insbesondere aus den erfindungsgemäßen Formmassen hergestellte Teile wie Lichtschaltergehäuse, Lampengehäuse, Gehäuse für die Zentralelektrik, Steckerleisten, Steckverbinder, Gehäuse für ABS-Regler, Kennzeichentafelträger sowie Gepäckträgerdachleisten.

Aufgrund ihres guten Emissionsverhaltens sind die erfindungsgemäßen Formteile insbesondere für Anwendungen im Kraftfahrzeug-Innenraum geeignet. Erfindungsgemäße Formteile sind daher vorzugsweise aus den erfindungsgemäßen Formmassen hergestellte Abdeckungen, Ablagefächer, Instrumententafelträger, Türbrüstungen, Teile für die Mittelkonsole sowie Halterungen für Radio und Klimaanlage, Blenden für die Mittelkonsole, Blenden für Radio, Klimaanlage und Aschenbecher, Verlängerungen der Mittelkonsole, Stautaschen, Ablagen für die Fahrer und Beifahrertür, Ablagen für die Mittelkonsole, Bauteile für den Fahrer- und den Beifahrersitz, wie Sitzverkleidungen, Defrosterkanal, Innenspiegelgehäuse, Schiebedachelemente wie Schiebedachrahmen, Instrumentenhutzen- und Blenden, Instrumentenfassungen, Ober- und Unterschale für den Lenkstock, Luftführungskanäle, Luftausströmer und Zwischenstücke für Personenanströmer und Defrosterkanal, Türseitenverkleidungen, Verkleidungen im Kniebereich, Luftaustrittsdüsen, Entfrosteröffnungen, Schalter und Hebel, sowie Luftfilter- und Lüfterkanäle, insbesondere für deren Verstärkerteile. Diese Anwendungen stehen nur beispielhaft für denkbare Kraftfahrzeug-Innenanwendungen. Besonders bevorzugt ist es, daß die erfindungsgemäßen Formteile laserbemusterbar sind.

Weiterhin sind als Formteile für Karosserieaußenteile, insbesondere Kotflügel, Heckklappen, Seitenverkleidungen, Stoßstangen, Beplankungen, Kennzeichentafelträger, Blenden, Schiebedachplatten oder -Rahmen sowie Stoßfänger oder deren Bestandteile bevorzugt.

Zudem seien Bootskörper, Rasenmähergehäuse, Gartenmöbel, Motorradteile Kameragehäuse, Handygehäuse, Stutzen für Ferngläser, Wrasenkanäle für Dunstabzugshaben, Teile für Dampfkochtöpfe, Gehäuse für Heißluftgrill und Pumpengehäuse nur beispielhaft als weitere, nicht auf den Kraftfahrzeugbereich begrenzte Formkörper genannt.

Die Verwendung der Formmasse hat sich insbesondere bewährt bei Formteilen wie Steckverbindern, Gehäuseteilen, insbesondere für die Groß-Kfz-Elektronik, wie insbesondere ABS/ASR-, ESP-Getriebe-, Sitz-, Spiegelmotor-, Fensterhebermotor-, Verdecksteuerungs-, Airbagauslöse-, Innenraumsicherungs-, Beschleunigungssensor-, und Zündelektronik sowie auch bei der Elektronik zur Erkennung der Sitzbelegung. Ferner ist es bevorzugt, die erfindungsgemäße Formmasse für Schließanlagengehäuse, Autorelais, Deckel für Wischergehäuse sowie für Schloßgehäuse zu verwenden.

Eine andere bevorzugte Gruppe von aus den erfindungsgemäßen Formmassen herstellbarer Formteile sind Gaszählergehäuse, Windleitschaufeln, Stellmotorgehäuse, wobei die Stellmotoren vorzugsweise im Kfz-Bau eingesetzt werden, Bohrmaschinenteile, Ofenteile, insbesondere zu Wärmeisolierung, wie Halteknöpfe und Ofengriffe, Scheibenwischerteile, insbesondere Wischerblatthalterungen, Spoiler, Spiegelträgerplatten für Kfz-Spiegel, sowie Gehäuse für Waschmaschinensteuerungen.

Ferner sind die erfindungsgemäßen Formmassen für andere im Haushaltsbereich, vorzugsweise im Küchenbereich eingesetzte Formkörper geeignet. Hierzu zählen Brotbackmaschinen, Toaster, Tischgrills, Küchenmaschinen, elektrische Dosenöffner und Saftpressen. Bei diesen Gegenständen werden aus den erfindungsgemäßen Formmassen vorzugsweise Schalter, Gehäuse, Griffe und Deckel hergestellt. Weiterhin lassen sich die erfindungsgemäßen Formmassen für Formteile von Herden verwenden. Bei Herden sind Herdgriffe, Herdknöpfe und Schalter besonders bevorzugt.

Eine andere Verwendung der erfindungsgemäßen Formmassen liegt in Formteilen vor, die den Anforderungen der Federal Drug Administration oder vergleichbarer nationaler Behörden anderer Länder entsprechen. In diesem Bereich sind insbesondere Arzneimittelverpackungen und Gebinde für Arzneimittelkits bevorzugt.

Zudem lassen sich die erfindungsgemäßen Formmassen im Bereich der Lebensmittelverpackung einsetzen. Hier sind Formteile aus den erfindungsgemäßen Formmassen wie Schachteln, Töpfe, Schalen und Behältnisse anderer Art bevorzugt.

Im Zusammenhang mit den Verwendungen der erfindungsgemäßen Formmassen ist insbesondere deren Lebensmittelechtheit und Fett- sowie Flüssigkeitsresistenz, die sich insbesondere bei Teilen von Haushaltsgeräten positiv auswirkt, hervorzuheben.

Besonders bewährt hat sich der Einsatz der vorstehend definierten Formmassen zur Herstellung von Formteilen, die hohen Temperaturbelastungen ausgesetzt sein können. Derartige Formteile sind insbesondere Scheinwerferteile, die in dem Bereich des Scheinwerfers eingesetzt werden, in dem während des Betriebs des Scheinwerfers Temperaturen über 100 °C, bevorzugt 110 °C und besonders bevorzugt 130 °C und maximal bis 200 °C auftreten können. Derartige Teile können sowohl glasfaserverstärkt als auch glasfaserunverstärkt sein.

Der Vorteil des Einsatzes der erfindungsgemäßen Formmassen liegt insbesondere darin, daß bei derartigen Scheinwerferteilen mit reflektierender, metallisierter Oberfläche es zu keiner Ermattung dieser Oberflächen kommt. Weiterhin führt der Einsatz der erfindungsgemäßen Formmassen dazu, daß es auch bei längerem Betrieb des Scheinwerfers nicht zu Ablagerungen auf den transparenten Bereichen des Scheinwerfers, durch die das Licht tritt, kommt und die Reflektionseigenschaften von metallisierten Oberflächen dieser Formkörper erhalten bleiben. Die erfindungsgemäßen Formmassen lassen sich auch zur Herstellung weiterer Scheinwerferbauteile verwenden. Zu diesen Scheinwerferbauteilen zählen insbesondere Scheinwerfergehäuse, -rahmen, -halterungen und -führungen, wobei Scheinwerferrahmen bevorzugt sind.

Weiterhin bleiben die anderen vorteilhaften Eigenschaften der erfindungsgemäßen Formmassen wie niedrige Zykluszeiten, keine Formbelagsbildung bei der Spritzgußverarbeitung, hervorragende Qualität der metallisierten Oberflächen erhalten.

Insbesondere ist keine Eintrübung der metallisierten Oberfläche beim Erwärmen des Formteils auf Temperaturen im Bereich von 100 bis 200 °C, bevorzugt von 110 bis 180 °C und besonders bevorzugt von 130 bis 170 °C zu beobachten, so daß Formteile mit metallisierten Oberflächen mit dauerhaften Reflektionseigenschaften erhalten werden können.

Ferner hat sich der Einsatz der erfindungsgemäßen Formmassen bei der Herstellung von großflächigen Formteilen, die im Verhältnis zu ihrer Fläche vergleichsweise dünn sind, bei denen ein hervorragendes Entformungsverhalten gefordert ist, bewährt. Derartige großflächige Formteile sind insbesondere Schiebedachtraversen, Karosserieteile, Lufteinlaßgitter, Teile von Instrumententafeln, wie Instrumententafelträger, Abdeckungen, Luftkanäle, Anbauteile, insbesondere für die Mittelkonsoloe als Teil des Handschuhfaches, sowie Tachohutzen.

Weiterhin betrifft die Erfindung einen Verbund, der ein erfindungsgemäßes Fromteil und einen Polykondensatschaum beinhaltet. Vorteilhafterweise sind Formteil und Polykondensatschaum über ihre Oberflächen miteinander fest verbunden. Die Verbunde zeichnen sich durch eine hervorragende Schaumhaftung des Schaumes an der Formteiloberfläche aus, ohne daß eine Vorbehandlung dieser, beispielsweise durch einen Primer, notwendig ist. Beim Abziehen oder Abschälen des Schaums von der Formteiloberfläche wird Kohäsionsbruch beobachtet; es verbleiben Schaumreste auf der Oberfläche. Für den Polykondensatschaum können alle dem Fachmann bekannten schäumbaren Polykondensate eingesetzt werden. Es ist in einer weiteren erfindungsgemäßen Ausführungsform bevorzugt, daß die auf die Formteiloberflächen der Schaum ohne die Verwendung eines Primers aufgebracht wird. Unter diesen Polykondensaten sind Polyamide und Polyurethane bevorzugt und Polyurethane besonders bevorzugt. Bei den Polyurethanschäumen sind wiederum Halbhart- und Weichschäume besonders bevorzugt, diese können gegebenenfalls Haftvermittler beinhalten. Insbesondere wird als Polyurethanschaum das Produkt Elastoflex® der Elastogram GmbH, Lemförde eingesetzt. Weitere geeignete Polyurethane sind im Kunststoffhandbuch Band 7 "Polyurethane", in 3. Auflage, 1993, Karl Hanser Verlag München, Wien zu entnehmen.

Gegenstand der Erfindung ist auch die Verwendung der erfindungsgemäßen Formmassen für die Herstellung der genannten Formteile.

Zudem betrifft die Erfindung ein Verfahren zur Einstellung mindestens einer der zuvor definierten Eigenschaften einer Formmasse, vorzugsweise einer Formmasse nach einem der Ansprüche 1 bis 6, durch die Variation der Konzentration von mindestens einer der vorstehend definierten Komponenten in den oben definierten Gew.-%-Bereichen.

Die Erfindung wird durch die nachstehenden Beispiele näher erläutert:

**Beispiele:**

Beispiele 1 bis 4 und Vergleichsbeispiel

Entsprechend den Angaben in der nachstehenden Tabelle 1 wurden die angegebenen Mengen Polybutylenterephthalat (PBT), Polyethylenterephthalat (PET), Glasfasern, Pfropfkautschuke P1 und P2, Copolymerisate PSAN 1, PSAN 2 und PSAN 3 und Additive in einem Schneckenextruder bei einer Temperatur von 250°C bis 270°C gemischt. Aus den dadurch gebildeten Formmassen werden die den betreffenden DIN-Normen entsprechenden Probekörper spritzgegossen.

PBT1 ist ein Polybutylenterephthalat mit einer Viskositätszahl (bestimmt nach in einer 0,05 g/ml Polymerlösung aus Phenol und 1,2-Dichlorbenzol (1:1)) von 107.

PBT2 ist ein Polybutylenterephthalat mit einer Viskositätszahl von 130.

P1 ist ein kleinteiliger ASA-Pfropfkautschuk mit 25 Gew.-% Acrylnitril in der SAN-Pfropfhülle mit einer mittleren Teilchengröße von ca. 100 nm.

PC ist das Polycarbonat Lexan® der Firma General Electric Plastics AG.

P2 ist ein großteiliger ASA-Pfropfkautschuk mit einem mittleren Teilchendurchmesser von ca. 500 nm.

PSAN 1 ist ein Styrol/Acrylnitril-Copolymerisat mit 19 Gew.-% Acrylnitril.

PSAN 2 ist ein Styrol-/Acrylnitril-Copolymerisat mit 35 Gew.-% Acrylnitril.

Entformungsmittel ist Loxiol VPG 861/3,5 Firma Henkel KGaA.

Ruß ist Black Pearls 880.

Talkum IT Extra.

Glasfaser (Schnittglasur Standardglas).

Die Beurteilung des Emissionsverhaltens erfolgte nach PV 3341 sowie nach DIN 50011/PV 3900 C3.

Die Messung der Geruchsemission nach DIN 50011/PV3900 C3 erfolgte wie folgt:

In einem 1 1-Gefäß mit geruchsneutraler Dichtung und Deckel wurde eine Probekörpermenge von 50 cm$^3$ fest verschlossen und in einer vorgeheizten Wärmekammer mit Luftumwälzung bei 80 °C während 2 Stunden gelagert. Nach Entnahme des Prüfgefäßes aus der Wärmekammer wurde das Prüfgefäß auf 60 °C abgekühlt, bevor die Bewertung durch mindestens 3 Prüfer erfolgte. Die Geruchsbeurteilung erfolgt anhand der Bewertungsskala mit den Noten 1 bis 6, wobei halbe Zwischenschritte möglich sind.

Bewertungsskala:

Note 1    nicht wahrnehmbar

Note 2    wahrnehmbar, nicht störend

Note 3    deutlich wahrnehmbar, aber noch nicht störend

Note 4    störend

Note 5    stark störend

Note 6    unerträglich

Tabelle 2 enthält die Ergebnisse der Geruchsprüfung sowie die Ergebnisse der darüber hinaus durchgeführten mechanischen Prüfungen.

Die Laserbeschriftung erfolgte durch eine Na-YAg-Laser bei einem Lampenstrom in von ca. 15 A. Die Kontraststärke wurde durch Betrachtung der Beschriftung über die Lesbarkeit ermittelt und mit "gut" und "schlecht" beurteilt.

Tabelle 1:

| Einsatzstoff [Gew.-%] | Beispiel 1 | Beispiel 2 | Beispiel 3 | Beispiel 4 | Beispiel 5 |
|---|---|---|---|---|---|
| PBT 1 | | | 55,1 | | |
| PBT 2 | 47,5 | 55,1 | | 56,1 | 47,1 |
| Glasfaser | 20 | 15 | 15 | 14 | 14 |
| PET | 10 | | | | 10 |
| P 1 | 12 | 3 | 3 | | 8 |
| P2 | | 3 | 3 | 6 | |
| PSAN 1 | | 15 | 15 | 15 | 15 |
| PSAN 2 | 10 | | | | |
| PC | | 8 | 8 | 8 | 5 |
| Entformungsmittel | 0,5 | 0,5 | 0,5 | 0,5 | 0,5 |
| Talkum | 0,1 | 0,1 | 0,1 | 0,1 | 0,1 |
| Ruß | 1 | 0,3 | 0,3 | 0,3 | 0,3 |

Tabelle 2:

| | Beispiel 1 | Beispiel 2 | Beispiel 3 | Beispiel 4 | Beispiel 5 |
|---|---|---|---|---|---|
| Fließfähigkeit nach MVR 275/2,16 [$cm^3$/10mm] | 13 13 | 15 15 | 22 22 | 17 17 | 18 18 |
| Dichte [g/$cm^3$] | 1,39 | 1,32 | 1,32 | 1,3 | 1,31 |
| Schlagzähigkeit nach ISO 179/1eU | 50 | 59 | 55 | 58 | 57 |
| Kerbschlagzähigkeit nach ISO 179/1eA [kJ/$m^2$] | 6 | 8 | 8 | 7 | 8 |
| Elastizitätsmodul nach DIN 53457 [MPa] | 6900 | 5300 | 5300 | 5000 | 5000 |
| Bruchspannung nach DIN 53457 [MPa] | 105 | 95 | 94 | 90 | 92 |

Tabelle 2:   (fortgesetzt)

|  | Beispiel 1 | Beispiel 2 | Beispiel 3 | Beispiel 4 | Beispiel 5 |
|---|---|---|---|---|---|
| Bruchdehnung nach DIN 53457 [%] | 2,4 | 3,5 | 3,5 | 3,7 | 3,5 |
| Durchstoßarbeit nach ISO 6603/2 [Nm] | 2,5 | 3,5 | 3,5 | 4 | 4 |
| HDT nach ISO 75 B [°C] | 143 | 140 | 139 | 139 | 143 |
| Geruchsprüfung nach PV 3900 C3 [Note] | 4,5 | 3,5 | 3,5 | 3,5 | 4,0 |
| Laserbeschriftung | schlecht | gut | gut | gut | Gut |
| Kohlenstoff-Emission nach PV 3341 [µg C/g] | 68 | 25 | 28 | 32 | 29 |

**Patentansprüche**

1. Verwendung faserverstärkter Formmassen, enthaltend, bezogen auf die Summe der Komponenten A bis I, die insgesamt 100 Gew.-% ergibt,

   a) 1 bis 96,86 Gew.-% der Formmasse mindestens eines schmelzbaren Polyesters als Komponente A, wobei die Komponente A aus

   a1) 60 bis 100 Gew.-% Polybutylenterephthalat und

   a2) 0 bis 40 Gew.-% eines weitren Polyesters

   besteht,

   b) 1 bis 12 Gew.-% mindestens eines teilchenförmigen Pfropfcopolymerisats mit einer Glasübergangstemperatur der Weichphase unterhalb von 0°C und einer mittleren Teilchengröße von 50 bis 1000 nm als Komponente B,

   c) 1 bis 12 Gew.-% mindestens eines Copolymerisats als Komponente C aus den Monomeren

   c1) 50 bis 90 Gew.-% mindestens eines vinylaromatischen Monomeren als Komponente C 1 und

   c2) 10 bis 50 Gew.-% Acrylnitril und/oder Methacrylnitril als Komponente C2, jeweils bezogen auf die Komponente C,

   d) 1 bis 20 Gew.-% Fasern als Komponente D,

   e) 0,01 bis 15 Gew.-% eines Polycarbonats als Komponente E,

   f) 0,01 bis 2 Gew.-% eines Rußes als Komponente F,

   g) 0 bis 12 Gew.-% eines zu Komponente B unterschiedlichen Polymers als Komponente G,

   h) 0 bis 20 Gew.-% eines zu Komponente A unterschiedlichen Polyester als Komponente H,

   i) 0,1 bis 10 Gew.-% übliche Zusatzstoffe wie UV-Stabilisatoren, Oxidationsverzögerer, Gleit- und Entformungsmittel als Komponente I,

   zur Herstellung von Formteilen für den Innenraum von Kraftfahrzeugen.

2. Verwendung von Formmassen nach Anspruch 1, wobei die Komponente B aus

   b1) 50 bis 90 Gew.-% einer teilchenförmigen Pfropfgrundlage B1 aus den Monomeren

b11)  75 bis 99,9 Gew.-% eines $C_1$-$C_{10}$-Alkylesters der Acrylsäure als Komponente B11,

b12)  0,1 bis 10 Gew.-% mindestens eines polyfunktionellen Monomeren mit mindestens zwei olefinischen, nicht konjugierten Doppelbindungen als Komponente B12 und

b13)  0 bis 24,9 Gew.-% eines oder mehrerer weiterer copolymerisierbarer Monomere als Komponente B13,

und

b2)  10 bis 50 Gew.-% einer Pfropfauflage B2 aus den Monomeren

b21)  50 bis 90 Gew.-% eines vinylaromatischen Monomeren als Komponente B21 und

b22)  10 bis 50 Gew.-% Acrylnitril und/oder Methacrylnitril als Komponente B22

besteht.

3.  Verwendung von Formmassen nach Anspruch 1 oder 2, wobei das Polycarbonat der Komponente E eine Fließfähigkeit (MVR 300 °C/1,2 kp cm$^3$/10 min ISO 1133) im Bereich von 9 bis 100 besitzt.

4.  Verwendung von Formmassen nach einem der Ansprüche 1 bis 3, wobei das Pfropfcopolymer der Komponente B kein Butadien- oder Isopren oder keines davon enthält.

5.  Verwendung von Formmassen nach einem der Ansprüche 1 bis 4, wobei die Komponente B zu 10 bis 90 Gew.-% aus einem kleinteiligen Pfropfcopolymerisat mit einer mittleren Teilchengröße von 50 bis 200 nm und zu 10 bis 90 Gew.-% aus einem großteiligen Pfropfcopolymerisat mit einer mittleren Teilchengröße von 250 bis 1000 nm besteht.

6.  Formteile für den Innenraum von Kraftfahrzeugen aus Formmassen, wie sie in einem der Ansprüche 1 bis 5 definiert sind.

**Claims**

1.  The use of fiber-reinforced molding compositions comprising, based on the total of components A to I, which in total give 100% by weight,

    a)  as component A, from 1 to 96.86% by weight of at least one fusible polyester, where component A is composed of

        a1)  from 60 to 100% by weight of polybutylene terephthalate and

        a2)  from 0 to 40% by weight of another polyester,

    b)  as component B, from 1 to 12% by weight of at least one particulate graft copolymer whose soft phase has a glass transition temperature below 0°C and whose median particle size is from 50 to 1000 nm,

    c)  as component C, from 1 to 12% by weight of at least one copolymer made from the following monomers,

        c1)  as component C1, from 50 to 90% by weight of at least one vinylaromatic monomer, and

        c2)  as component C2, from 10 to 50% by weight of acrylonitrile and/or methacrylonitrile, based in each case on component C,

    d)  as component D, from 0 to 20% by weight of fibers,

    e)  as component E, from 0.01 to 15% by weight of a polycarbonate,

f) as component F, from 0.01 to 2% by weight of a carbon black,

g) as component G, from 0 to 12% by weight of a polymer other than component B,

h) as component H, from 0 to 20% by weight of a polyester other than component A,

i) as component I, from 0.1 to 10% by weight of conventional additives, such as UV stabilizers, oxidation retarders, lubricants and mold-release agents, for producing moldings for motor vehicle interiors.

wherein

2. The use of molding compositions as claimed in claim 1, wherein component B is composed of

b1) from 50 to 90% by weight of a particulate graft base B1 made from the following monomers

b11) as component B11, from 75 to 99.9% by weight of a $C_1$-$C_{10}$-alkyl acrylate,

b12) as component B12, from 0.1 to 10% by weight of at least one polyfunctional monomer having at least two non-conjugated olefinic double bonds, and

b13) as component B13, from 0 to 24.9% by weight of one or more other copolymerizable monomers,

and

b2) from 10 to 50% by weight of a graft B2 made from the following monomers

b21) as component B21, from 50 to 90% by weight of a vinylaromatic monomer, and

b22) as component B22, from 10 to 50% by weight of acrylonitrile and/or methacrylonitrile.

3. The use of molding compositions as claimed in claim 1 or 2, where the polycarbonate of component E has a flowability (MVR 300°C/1.2 kp cm$^3$/10 min ISO 1133) of from 9 to 100.

4. The use of molding compositions as claimed in any one of claims 1 to 3, where the graft copolymer of component B contains no butadiene derivative or no isoprene derivative, or neither of these.

5. The use of molding compositions as claimed in any one of claims 1 to 4, where component B is composed of from 10 to 90% by weight of a small-particle graft copolymer with a median particle size of from 50 to 200 nm and from 10 to 90% by weight of a large-particle graft copolymer with a median particle size of from 250 to 1000 nm.

6. A molding made from molding compositions as defined in any of claims 1 to 5 for motor vehicle interiors.

**Revendications**

1. Utilisation de masses de moulage renforcées de fibres contenant, par rapport à la somme des composants A à 1, qui égale au total 100% en poids,

a) de 1 à 96,86% en poids, par rapport à la masse de moulage, d'au moins un polyester fusible en tant que composant A, le composant A étant constitué de

a1 ) 60 à 100% en poids de polybutylène téréphtalate et
a2) 0 à 40% en poids d'un autre polyester,

b) de 1 à 12% en poids d'au moins un copolymère greffé particulaire présentant une température de transition vitreuse de la phase molle de moins de 0°C et une taille moyenne de particules de 50 à 1000 nm, en tant que composant B,
c) de 1 à 12% en poids d'au moins un copolymère, en tant que composant C, constitué des monomères suivants:

c1)   50 à 90% en poids d'au moins un monomère vinylaromatique en tant que composant C1 et

c2)   10 à 50% en poids d'acrylonitrile et/ou de méthacrylonitrile en tant que composant C2, à chaque fois par rapport au composant C,

d)   1 à 20% en poids de fibres en tant que composant D,

e)   0,01 à 15% en poids d'un polycarbonate en tant que composant E,

f)   0,01 à 2% en poids d'un noir de carbone en tant que composant F,

g)   0 à 12% en poids d'un polymère différent du composant B en tant que composant G,

h)   0 à 20% en poids d'un polyester différent du composant A en tant que composant H,

i)   0,1 à 10% en poids d'additifs usuels tels que des stabilisants aux UV, des inhibiteurs d'oxydation, des lubrifiants et des agents de démoulage en tant que composant 1,

pour la préparation de pièces moulées pour l'intérieur de véhicules automobiles.

**2.**   Utilisation de masses de moulage selon la revendication 1, où le composant B est constitué de

b1)   50 à 90% en poids d'une base de greffage particulaire B1 constituée des monomères suivants:

b11)   75 à 99,9% en poids d'un $(C_1-C_{10})$alkylester d'acide acrylique en tant que composant B11,

b12)   0,1 à 10% en poids d'au moins un monomère polyfonctionnel comportant au moins deux doubles liaisons oléfiniques non conjuguées en tant que composant B12 et

b13)   0 à 24,9% en poids d'un ou plusieurs autres monomères copolymérisables en tant que composant B13,

et

b2)   10 à 50% en poids d'une enveloppe de greffage B2 constituée des monomères suivants:

b21)   50 à 90% en poids d'un monomère vinylaromatique en tant que composant B21 et

b22)   10 à 50% en poids d'acrylonitrile et/ou de méthacrylonitrile en tant que composant B22.

**3.**   Utilisation de masses de moulage selon la revendication 1 ou 2, où le polycarbonate du composant E possède une fluidité (MVR 300°C / 1,2 kp cm$^3$ / 10 min. ISO 1133) de l'ordre de 9 à 100.

**4.**   Utilisation de masses de moulage selon l'une quelconque des revendications 1 à 3, où le copolymère greffé du composant B ne contient pas de butadiène ou pas d'isoprène, ou aucun d'entre eux.

**5.**   Utilisation de masses de moulage selon l'une quelconque des revendications 1 à 4, où le composant B est constitué à raison de 10 à 90% en poids d'un copolymère greffé à petites particules, d'une taille moyenne de particules de 50 à 200 nm, et à raison de 10 à 90% en poids d'un copolymère greffé à grosses particules, d'une taille moyenne de particules de 250 à 1000 nm.

**6.**   Pièces moulées pour intérieur de véhicules automobiles, à base de masses de moulage telles que définies dans l'une quelconque des revendications 1 à 5.